# EUROPÄISCHE PATENTSCHRIFT

(11) **EP 3 081 311 B1**
(45) Veröffentlichungstag und Bekanntmachung des Hinweises auf die Patenterteilung: **24.07.2019**
(21) Anmeldenummer: 16163704.6
(22) Anmeldetag: 04.04.2016
(51) Int. Cl.: B05B 15/58, B05B 9/04, C10K 1/06, B01D 53/18, B05B 1/30, B05B 15/55, B05B 1/34

(54) **SPRÜHANORDNUNG UND VERFAHREN ZUM BETREIBEN EINER SPRÜHANORDNUNG**
SPRAY ASSEMBLY, AND METHOD FOR OPERATING A SPRAY ASSEMBLY
ENSEMBLE DE PULVERISATION ET PROCEDE DE FONCTIONNEMENT D'UN ENSEMBLE DE PULVERISATION

(30) Priorität: 13.04.2015 DE 102015206548
(43) Veröffentlichungstag der Anmeldung: 19.10.2016
(73) Patentinhaber: Lechler GmbH, 72555 Metzingen (DE)
(72) Erfinder: Zeeb, Thomas, 73257 Köngen (DE)
(74) Vertreter: Patentanwälte Ruff, Wilhelm, Beier, Dauster & Partner mbB

(56) Entgegenhaltungen:
- WO-A1-01/95714
- WO-A1-2013/011089
- WO-A2-2004/071157

## Beschreibung

Die Erfindung betrifft eine Sprühanordnung mit wenigstens einer Rücklaufdüse zum Eindüsen von Flüssigkeit in eine Prozessumgebung, mit einem Vorratstank für die einzudüsende Flüssigkeit, wenigstens einer Rücklaufdüse, wenigstens einer Vorlaufleitung vom Vorratstank zu der wenigstens einen Rücklaufdüse, wenigstens einer Pumpe in der Vorlaufleitung, wenigstens einer Rücklaufleitung von der Rücklaufdüse zum Vorratstank und wenigstens einem Regelventil zum Regeln einer von der wenigstens einen Rücklaufdüse eingedüsten Flüssigkeitsmenge.

Sprühanordnungen mit Rücklaufdüsen haben den Vorteil, dass die eingedüste Flüssigkeitsmenge in einfacher Weise über die Menge der in der Rücklaufleitung strömenden Flüssigkeit geregelt werden kann. Solche Sprühanordnungen werden beispielsweise zur Gasreinigung oder Gaskühlung eingesetzt, wobei dann die Sprühanordnung mit mehreren Rücklaufdüsen Flüssigkeit in einen Prozessraum, beispielsweise in einen Gaskühler, eindüst. Um stromabwärts des Prozessraums bzw. des Gaskühlers nachfolgende Abschnitte der Anlage nicht nachteilig zu beeinflussen, muss die eingedüste Flüssigkeitsmenge so eingestellt werden, dass die eingedüste Flüssigkeit am Ausgang des Gaskühlers vollständig verdampft ist. Dies erfordert eine Regelung der eingedüsten Flüssigkeitsmenge. Nachteilig an Sprühanordnungen mit Rücklaufdüsen ist, dass im Regelbereich mehr Flüssigkeit in der Vorlaufleitung zugefördert werden muss als von der Rücklaufdüse eingedüst wird. Lediglich bei maximal möglicher Eindüsung, also bei geschlossener Rücklaufleitung, entspricht die Menge der zugeführten Flüssigkeit der Menge der eingedüsten Flüssigkeit. Wird weniger als die maximal mögliche Flüssigkeit eingedüst, muss über die Vorlaufleitung sogar mehr Flüssigkeit zugeführt werden als der maximal möglichen eingedüsten Flüssigkeitsmenge entspricht. Das Volumenstromverhältnis der von der Pumpe zu fördernden Wassermenge bei maximaler Eindüsung zu der von der Pumpe zu fördernden Wassermenge bei minimaler Eindüsung liegt normalerweise im Bereich von 1,3 bis 1,7. Dies bedeutet für die Auslegung des Rücklaufdüsensystems, dass die Förderpumpe für einen um 30% bis 70% höheren Volumenstrom ausgelegt werden muss, als für die maximale Eindüsung benötigt wird, dass die elektrischen Komponenten zur Absicherung und Schaltung sowie die Kabelquerschnitte zur Versorgung der Motoren der Förderpumpen für die erforderliche Leistung bei der großen zu fördernden Wassermenge bei minimaler Eindüsung ausgelegt werden müssen und dass die Rohrleitungen für die Vorlaufleitung und die Rücklaufleitung für einen um 30% bis 70% höheren Volumenstrom ausgelegt werden müssen, als für die maximale Eindüsung benötigt wird.

Aus der internationalen Offenlegungsschrift WO 2004/071157 A2 ist eine Sprühanordnung bekannt, die für den mobilen Einsatz auf Feldspritzen vorgesehen ist. Mehrere Sprühdüsen sind an einem Ausleger angeordnet und sind mit einer sich über den gesamten Ausleger erstreckenden Vorlaufleitung verbunden. Am Ende der Vorlaufleitung führt eine Rücklaufleitung wieder zurück in einen Vorratstank. Die einzelnen Sprühdüsen am Ausleger werden über den Flüssigkeitsdruck in der Vorlaufleitung geöffnet und geschlossen und sind hierzu mit einem integrierten Rückschlagventil versehen. Steigt der Flüssigkeitsdruck in der Vorlaufleitung über einen vorbestimmten Wert, öffnet das Rückschlagventil und die Sprühdüse gibt einen Sprühstrahl aus. Sobald der Flüssigkeitsdruck in der Vorlaufleitung wieder unter den vordefinierten Druck sinkt, schließt das Rückschlagventil und der Sprühstrahl wird unterbrochen. Eine Regelung der von den Sprühdüsen ausgegeben Flüssigkeitsmenge ist nicht möglich.

Eine weitere Sprühanordnung für den Einsatz auf einer mobilen Feldspritze ist aus der internationalen Offenlegungsschrift WO 01/95714 A1 bekannt. Auch dort ist eine Vorlaufleitung und eine Rücklaufleitung vorgesehen. Im Unterschied zu Rücklaufdüsen können die verwendeten Sprühdüsen aber nicht geregelt werden.

Aus der internationalen Offenlegungsschrift WO 2013/011089 A1 ist eine Sprühanordnung mit Rücklaufdüsen zum Eindüsen von Flüssigkeit in eine Prozessumgebung bekannt. Die Sprühanordnung ist zum Kühlen von Konvertergas vorgesehen und mittels der Rücklaufdüsen wird Wasser in den Gasstrom des Konvertergases eingedüst. Das flüssige Kühlmedium soll als Nebel feiner Tropfen eingebracht werden, die vollständig verdunsten und dadurch das Konvertergas kühlen.

Mit der Erfindung sollen eine Sprühanordnung mit wenigstens einer Rücklaufdüse und ein Verfahren zum Betreiben einer solchen Sprühanordnung verbessert werden.

Erfindungsgemäß ist hierzu eine Sprühanordnung mit den Merkmalen von Anspruch 1 vorgesehen. Die Sprühanordnung ist mit wenigstens einer Rücklaufdüse zum Eindüsen von Flüssigkeit in eine Prozessumgebung, mit einem Vorratstank für die einzudüsende Flüssigkeit, wenigstens einer Rücklaufdüse, wenigstens einer Vorlaufleitung vom Vorratstank zu der wenigstens einen Rücklaufdüse, wenigstens einer Pumpe in der Vorlaufleitung, wenigstens einer Rücklaufleitung von der Rücklaufdüse zum Vorratstank und wenigstens einem Regelventil zum Regeln einer von der wenigstens einen Rücklaufdüse eingedüsten Flüssigkeitsmenge versehen, wobei wenigstens eine weitere Düse vorgesehen ist, die mittels eines steuerbaren Ventils zum Freigeben und Absperren einer Flüssigkeitszufuhr mit der Vorlaufleitung verbunden ist und die nicht an die Rücklaufleitung angeschlossen ist.

Indem neben der wenigstens einen Rücklaufdüse wenigstens eine weitere Düse vorgesehen ist, die mittels eines steuerbaren Ventils zu- oder abgeschaltet werden kann, wird es möglich, die Pumpen sowie die Rohrleitungen und die elektrische Ausrüstung der Sprühanordnung nur für die bei der maximalen Eindüsung eingedüste Wassermenge auszulegen. Denn die maximale Eindüsung wird nicht durch die wenigstens eine Rücklaufdüse alleine, sondern durch die mit geschlossenem Rücklauf betriebene Rücklaufdüse und die wenigstens eine weitere, zugeschaltete Düse erreicht. Wird nun die Rücklaufdüse im Regelbereich, also mit weniger als der maximal möglichen Eindüsung betrieben, so steigt zwar die von der Pumpe in der Vorlaufleitung zu fördernde Flüssigkeitsmenge an. Da die maximale Eindüsung der Rücklaufdüse aber um den Betrag der von der weiteren Düse bewirkten Eindüsung niedriger liegt als bei konventionellen Sprühanordnungen, steigt die im Regelbereich in der Vorlaufleitung zu fördernde Flüssigkeitsmenge nicht über die maximal benötigte Eindüsung der gesamten Sprühanordnung. Die Pumpen, Rohrleitungen und die elektrische Ausrüstung der erfindungsgemäßen Sprühanordnung können also auf die maximal benötigte Eindüsung der gesamten Sprühanordnung ausgelegt werden. Gegenüber konventionellen Sprühanordnungen, die ausschließlich regelbare Rücklaufdüsen verwenden, ermöglicht dies erhebliche Einsparungen.

Darüber hinaus wird durch die Kombination wenigstens einer Rücklaufdüse, die in ihrem kompletten Regelbereich von maximaler bis minimaler Eindüsung betrieben wird, mit wenigstens einer weiteren, zuschaltbaren Düse, das Regelverhältnis der gesamten Sprühanordnung erhöht. Wenn die wenigstens eine Rücklaufdüse ihre maximale Eindüsung erreicht hat, also ihr Rücklauf geschlossen ist, können eine oder kaskadiert mehrere weitere Düsen hinzugeschaltet werden, wenn noch mehr Flüssigkeit eingedüst werden soll. Da gegenüber konventionellen Systemen weniger geregelte Rücklaufdüsen erforderlich sind, wird die zu fördernde Flüssigkeitsmenge für die minimale Eindüsung reduziert. Das Anfahrverhalten der Sprühanordnung wird dadurch ebenfalls verbessert.

In Weiterbildung der Erfindung ist die wenigstens eine weitere Düse als Einstoffdüse ausgebildet.

Mittels einer Einstoffdüse kann ein ähnliches oder sogar identisches Sprühverhalten wie bei den Rücklaufdüsen erreicht werden. Beispielsweise sind die Einstoffdüsen als Rücklaufdüsen ausgebildet, aber nicht mit der Rücklaufleitung verbunden. Auf diese Weise kann bei den Rücklaufdüsen und den weiteren Düsen problemlos ein identisches Sprühbild erzielt werden.

In Weiterbildung der Erfindung ist die wenigstens eine weitere Düse mit einer Freiblaseinrichtung versehen.

Es hat sich als vorteilhaft herausgestellt, die wenigstens eine weitere Düse im abgeschalteten Zustand freizublasen, beispielsweise mittels Druckluft. Dadurch werden Ablagerungen in der weiteren Düse im abgeschalteten Zustand vermieden. Speziell erspart eine Freiblaseinrichtung das manuelle Entleeren der Düse, beispielsweise durch Ausbau der Sprühlanze und anschließendes Freiblasen.

In Weiterbildung der Erfindung ist eine Druckluftquelle vorgesehen, die mittels eines schaltbaren Ventils mit der wenigstens einen weiteren Düse verbindbar ist. Auf diese Weise können die weiteren Düsen problemlos freigeblasen werden. Dadurch verbleibt keine Flüssigkeit innerhalb der weiteren Düsen in deren abgeschalteten Zustand, so dass keine Inkrustierungen zu befürchten sind.

Das der Erfindung zugrundeliegende Problem wird auch durch ein Verfahren zum Betreiben einer erfindungsgemäßen Sprühanordnung gelöst, bei dem in einem ersten Betriebsbereich Flüssigkeit ausschließlich über die wenigstens eine Rücklaufdüse in die Prozessumgebung eingedüst wird und bei dem in einem zweiten Betriebsbereich Flüssigkeit sowohl mittels der wenigstens einen Rücklaufdüse als auch mittels der wenigstens einen weiteren Düse eingedüst wird.

Indem somit eine oder mehrere weitere Düsen zugeschaltet werden, um die eingedüste Flüssigkeitsmenge schrittweise zu erhöhen, müssen die Pumpen, die Rohrleitungsquerschnitte und die elektrische Ausrüstung der erfindungsgemäßen Sprühanordnung lediglich für diejenige Flüssigkeitsmenge ausgelegt werden, die bei maximaler Eindüsung der gesamten Sprühanordnung benötigt wird. Gegenüber konventionellen Sprühanordnungen, die ausschließlich mit Rücklaufdüsen arbeiten, können dadurch erhebliche Einsparungen realisiert werden.

In Weiterbildung der Erfindung ist das Regeln einer ersten Flüssigkeitsmenge im ersten Betriebsbereich in Abhängigkeit einer vorgegebenen einzudüsenden Flüssigkeitsmenge vorgesehen.

In einem ersten Betriebsbereich, der zwischen einer minimal möglichen Eindüsung und einer mittels der wenigstens einen Rücklaufdüse maximal erreichbaren Eindüsung liegt, kann die eingedüste Flüssigkeitsmenge mittels der Rücklaufdüsen geregelt werden.

In Weiterbildung der Erfindung ist das Zuschalten, ungeregelte Betreiben und/oder Abschalten der wenigstens einen weiteren Düse im zweiten Betriebsbereich vorgesehen.

Der zweite Betriebsbereich liegt zwischen der mittels der wenigstens einen Rücklaufdüse maximal erreichbaren Eindüsung und der maximalen Eindüsung der gesamten Sprühanordnung. In diesem zweiten Betriebsbereich werden zum Erreichen einer vorgegebenen einzudüsenden Flüssigkeitsmenge wenigstens eine weitere Düse oder mehrere weitere Düsen zugeschaltet. Das Zuschalten erfolgt vorteilhafterweise kaskadiert, um eine schrittweise Erhöhung bzw. Erniedrigung der gesamten eingedüsten Flüssigkeitsmenge zu erzielen. Ein wesentlicher Vorteil gegenüber konventionellen Sprühanordnungen, die ausschließlich mit Rücklaufdüsen arbeiten, ist dabei, dass die weiteren Düsen lediglich zugeschaltet und dann ungeregelt betrieben bzw. abgeschaltet werden. Die den weiteren Düsen zugeführte Flüssigkeitsmenge wird somit vollständig in die Prozessumgebung eingedüst. Sollte im zweiten Betriebsbereich eine feinere Abstufung der eingedüsten Flüssigkeitsmenge erforderlich sein, als sich durch das Zuschalten oder Abschalten der weiteren Düsen ergibt, so ist auch im zweiten Betriebsbereich eine Regelung der eingedüsten Flüssigkeitsmenge über die Rücklaufdüsen möglich. Beispielsweise wird beim Hochfahren einer eingedüsten Flüssigkeitsmenge zunächst die Rücklaufdüse bis zu ihrer maximal möglichen Eindüsung gebracht, indem der Rücklauf der Rücklaufdüse geschlossen wird. Dann wird wenigstens eine weitere Düse zugeschaltet, wodurch sich die von der gesamten Sprühanordnung eingedüste Flüssigkeitsmenge stufenartig erhöht. Soll nun die dann eingedüste Flüssigkeitsmenge geregelt werden, so kann dies durch einen Regelbetrieb der Rücklaufdüse erfolgen.

In Weiterbildung der Erfindung sind mehrere weitere Düsen vorgesehen und im zweiten Betriebsbereich erfolgt das Zuschalten, ungeregelte Betreiben und/oder Abschalten einer Anzahl von weiteren Düsen in Abhängigkeit einer vorgegebenen einzudüsenden Flüssigkeitsmenge. Bei mehreren weiteren Düsen können diese kaskadenartig zu- oder abgeschaltet werden, um eine vorgegebene einzudüsende Flüssigkeitsmenge zu erzielen.

In Weiterbildung der Erfindung ist im zweiten Betriebsbereich das Regeln einer eingedüsten Flüssigkeitsmenge mittels einer Regelung der wenigstens einen Rücklaufdüse vorgesehen.

Auf diese Weise kann auch im zweiten Betriebsbereich eine Regelung der eingedüsten Flüssigkeitsmenge erfolgen. Dies wird dann bevorzugt, wenn die Abstufung durch Zu- oder Abschalten der wenigstens einen weiteren Düse eine zu grobe Abstufung für einen zufriedenstellenden Betrieb der Sprühanordnung darstellt.

In Weiterbildung der Erfindung ist das Freiblasen der wenigstens einen weiteren Düse nach dem Abschalten vorgesehen.

Auf diese Weise können Inkrustierungen oder Verstopfungen der wenigstens einen weiteren Düse verhindert werden, wenn diese abgeschaltet und somit nicht in Betrieb ist.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Schnittansicht einer Rücklaufdüse in einem ersten Betriebszustand,
- Fig. 2: eine Schnittansicht einer Rücklaufdüse in einem zweiten Betriebszustand,
- Fig. 3: eine schematische Darstellung einer erfindungsgemäßen Sprühanordnung und
- Fig. 4: ein Diagramm zur Verdeutlichung eines Verfahrens zum Betreiben der erfindungsgemäßen Sprühanordnung der Fig. 3.

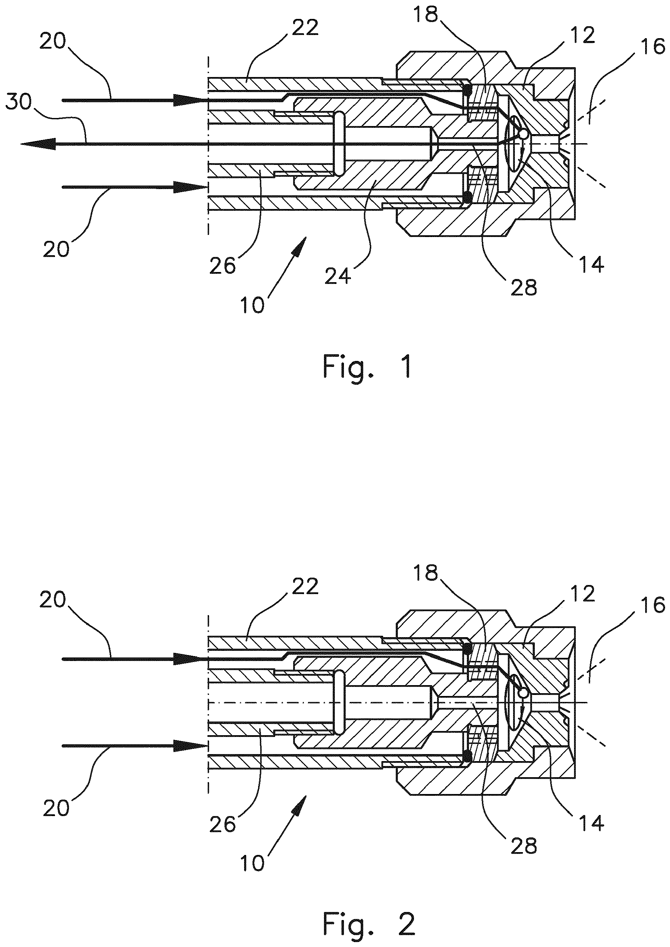

Die Darstellung der Fig. 1 zeigt eine Rücklaufdüse 10 in einer Schnittansicht und dient zur Erläuterung der Betriebsweise der Rücklaufdüse 10. Die Rücklaufdüse 10 weist ein Gehäuse mit einem Mundstück 12 auf, das einen Drallraum 14 und eine Austrittsöffnung aufweist, aus der im Betrieb ein Sprühstrahl 16 austritt. Innerhalb des Drallraums bewegt sich die zu versprühende Flüssigkeit im Kreis, was durch einen Kreispfeil in Fig. 1 angedeutet ist. Die Flüssigkeit innerhalb des Drallraums wird über einen Dralleinsatz 18 zugeführt, der die Flüssigkeit in eine Rotation um eine Mittellängsachse der Rücklaufdüse 10 versetzt. Ein Zulauf von Flüssigkeit gemäß den Pfeilen 20 erfolgt über eine Zulaufleitung 22. Innerhalb der Zulaufleitung 22 ist konzentrisch ein Rücklaufanschluss 24 angeordnet, der einerseits mit einer Rücklaufleitung 26 und andererseits mit dem Düsengehäuse, speziell mit dem Dralleinsatz 18, verbunden ist. Der Rücklaufanschluss 24 weist eine Rücklaufbohrung 28 auf, die einerseits mit dem Drallraum 14 und andererseits mit der Rücklaufleitung 26 in Verbindung steht. Über die Rücklaufbohrung 28 und dann die Rücklaufleitung 26 kann Flüssigkeit aus dem Drallraum 14 entweichen, was durch einen Pfeil 30 angedeutet ist.

In der Rücklaufleitung 26 ist ein nicht dargestelltes regelbares Ventil angeordnet. Abhängig davon, wie weit dieses Ventil in der Rücklaufleitung 26 offen ist, wird mehr oder weniger Flüssigkeit aus der Drallkammer 14 in Richtung des Pfeils 30 in die Rücklaufleitung 26 zurückfließen. Über die Stellung des Ventils, also über die Menge der Flüssigkeit, die aus der Drallkammer 14 über die Rücklaufbohrung 28 entnommen wird, kann die von der Rücklaufdüse 10 über den Sprühstrahl 16 versprühte Flüssigkeitsmenge geregelt werden.

Fig. 2 zeigt die Rücklaufdüse 10 in einem zweiten Betriebszustand. In diesem zweiten Betriebszustand ist das Ventil in der Rücklaufleitung 26 und somit die Rücklaufleitung 26 selbst vollständig verschlossen. Dadurch kann keine Flüssigkeit aus der Drallkammer 14 über die Rücklaufbohrung 28 entweichen. Alle Flüssigkeit, die gemäß den Pfeilen 20 in die Zulaufleitung 22 eingeführt wird und über den Dralleinsatz 18 in die Drallkammer 14 im Mundstück 12 gelangt, wird somit in Form des Sprühstrahls 16 ausgegeben. Der Betriebszustand der Fig. 2 stellt den Zustand dar, in dem mittels der Rücklaufdüse 10 die maximal mögliche Flüssigkeitsmenge über den Sprühstrahl 16 versprüht wird.

Im Betriebszustand der Fig. 1 kann hingegen die von der Rücklaufdüse 10 über den Sprühstrahl 16 ausgegebene Flüssigkeitsmenge geregelt werden. Ein Regelverhältnis liegt bei üblichen Rücklaufdüsen 10 bei etwa 10:1. Die im Betriebszustand der Fig. 2 maximal mögliche versprühte Flüssigkeitsmenge beträgt somit etwa das Zehnfache der minimal möglichen versprühten Flüssigkeitsmenge im Zustand der Fig. 1.

Rücklaufdüsen haben die Eigenschaft, dass unterhalb der maximalen Eindüsung, also im Betriebszustand der Fig. 1, die durch die Pumpe zu fördernde Flüssigkeitsmenge, die also in Fig. 1 gemäß den Pfeilen 20 in der Zulaufleitung 22 gefördert wird, umso mehr zunimmt, je geringer die über den Sprühstrahl 16 ausgegebene Flüssigkeitsmenge ist. Dies ist deshalb der Fall, da, um die über den Sprühstrahl 16 ausgegebenen Flüssigkeitsmenge zu verringern, das Ventil in der Rücklaufleitung 26 geöffnet werden muss. Dadurch strömt gemäß dem Pfeil 30 Flüssigkeit in der Rücklaufleitung 26 zurück, wodurch sich die von der Pumpe zu fördernde Flüssigkeitsmenge erhöht, wenn gleichzeitig ein gut ausgebildeter Sprühstrahl 16 erzeugt werden soll. Dieser Effekt beim Betrieb von Rücklaufdüsen 10 hat aber die Auswirkung, dass eine Pumpe in die Zulaufleitung 22 im Betriebszustand der Fig. 1 mehr Flüssigkeit fördern muss als im Betriebszustand der maximal möglichen versprühten Flüssigkeitsmenge im Zustand der Fig. 2. Das Volumenstromverhältnis der von der Pumpe zu fördernden Flüssigkeitsmenge bei maximaler Eindüsung, also im Zustand der Fig. 2, zu der von der Pumpe zu fördernden Flüssigkeitsmenge bei minimaler Eindüsung, also im Betriebszustand der Fig. 1, liegt bei üblichen Rücklaufdüsen im Bereich von 1,3 bis 1,7. Das bedeutet für die Auslegung einer Sprühanordnung mit der Rücklaufdüse 10, dass die Pumpe für einen um 30% bis 70% höheren Volumenstrom ausgelegt werden muss, als für die Eindüsung der maximal möglichen Flüssigkeitsmenge benötigt wird. Dies hat auch zur Folge, dass der Pumpenmotor und die elektrischen Komponenten zum Betreiben der Pumpe sowie die Rohrleitungen für den um 30% bis 70% höheren Flüssigkeitsstrom ausgelegt werden müssen.

Beim Betrieb von Sprühanordnungen mit Rücklaufdüsen 10 hat dies vergleichsweise hohe Kosten für die Pumpen, deren elektrische Ausrüstung sowie auch die Rohrleitungen zu den Rücklaufdüsen zur Folge. Sprühanordnungen mit Rücklaufdüsen werden beispielsweise in großtechnischen Anlagen, beispielsweise Zementwerken, eingesetzt. Die Rücklaufdüsen müssen hierzu bisweilen in Türmen angeordnet werden, so dass auch die Rohrlängen zur Versorgung dieser Rücklaufdüsen eine erhebliche Länge aufweisen. Die Kosten für die Bereitstellung dieser Rohrleitungen sind dadurch nennenswert.

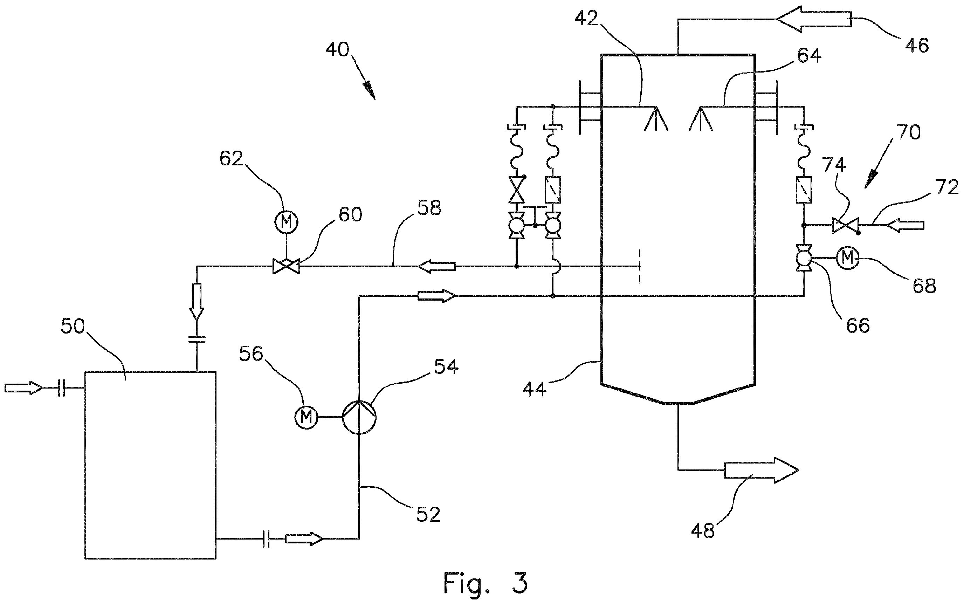

Fig. 3 zeigt eine erfindungsgemäße Sprühanordnung 40 in schematischer Darstellung. Die Sprühanordnung 40 weist mehrere Rücklaufdüsen 42 auf, die Flüssigkeit in einen Prozessraum innerhalb eines Gaskühlers 44 einsprühen, wobei der Übersichtlichkeit halber nur eine Rücklaufdüse 42 dargestellt ist. In den Gaskühler 44 wird heißes Gas gemäß einem Pfeil 46 oben eingeleitet und abgekühltes Gas gemäß einem Pfeil 48 am unteren Ende des Gaskühlers 44 wieder abgeführt. Um die in Fig. 3 nicht dargestellten weiteren Anlagenkomponenten stromabwärts des Gaskühlers 44 zu schützen, muss sichergestellt sein, dass die mittels der Rücklaufdüsen 42 eingedüste Flüssigkeitsmenge am unteren Ende des Gaskühlers 44 vollständig verdampft ist. Aus diesem Grund sind die Rücklaufdüsen 42 regelbar, wie anhand der Fig. 1 und 2 erläutert wurde. Die Rücklaufdüsen 42 werden aus einem Vorratstank 50 über eine Vorlaufleitung 52 mit zu versprühender Flüssigkeit versorgt. In der Vorlaufleitung 52 ist eine Flüssigkeitspumpe 54 angeordnet, die mittels eines Elektromotors 56 angetrieben wird. Die Rücklaufdüsen 42 sind mit einer Rücklaufleitung 58 verbunden, die wieder zum Vorratstank 50 führt. In der Rücklaufleitung 58 ist ein Regelventil 60 angeordnet, mit dem ein Volumenstrom in der Rücklaufleitung 58 und damit die von den Rücklaufdüsen 42 ausgegebene Flüssigkeitsmenge geregelt werden kann. Eine Steuereinheit für die Ansteuerung eines Verstellmotors 62 des Regelventils 60 ist der Übersichtlichkeit halber nicht dargestellt.

Die Vorlaufleitung 52 ist mit mehreren weiteren Düsen 64 verbunden, die ebenfalls Flüssigkeit in den Innenraum des Gaskühlers 44 einsprühen, wobei der Übersichtlichkeit halber nur eine weitere Düse 64 dargestellt ist. Eine Flüssigkeitszufuhr zu den weiteren Düsen 64 kann mittels eines steuerbaren Ventils 66 freigegeben oder abgesperrt werden. Eine Steuereinheit zur Ansteuerung eines Antriebsmotors 68 des steuerbaren Ventils 66 ist der Übersichtlichkeit halber ebenfalls nicht dargestellt.

Die weiteren Düsen 64 sind nicht an die Rücklaufleitung 58 angeschlossen. Die weiteren Düsen 64 können zwar ebenfalls als Rücklaufdüsen ausgebildet sein, also in gleicher Weise wie die Rücklaufdüse 10 der Fig. 1 und Fig. 2. Die weiteren Düsen 64 sind aber in jedem Fall nicht an die Rücklaufleitung 58 angeschlossen, so dass die weiteren Düsen 64, selbst wenn sie als Rücklaufdüsen 10 ausgebildet sind, immer nur in dem Betriebspunkt der Fig. 2, also mit der maximal möglichen Flüssigkeitsmenge, die über den Sprühstrahl 16 ausgegeben wird, betrieben werden können.

Aus Kostengründen sind die weiteren Düsen 64 aber vorteilhafterweise als nicht regelbare Sprühdüsen und somit nicht als Rücklaufdüsen ausgebildet.

Indem nun die weiteren Sprühdüsen 64 mittels des steuerbaren Ventils 66 zu- oder abgeschaltet werden können, kann eine in den Gaskühler 44 eingedüste Flüssigkeitsmenge über die von den Rücklaufdüsen 42 eingedüste Flüssigkeitsmenge hinaus erhöht werden. Da die weiteren Düsen 64 aber nur dann zugeschaltet werden, wenn eine höhere Flüssigkeitsmenge eingedüst werden soll, also die Rücklaufdüsen 42 maximal eindüsen können, muss die Pumpe 54 und infolgedessen auch der Antriebsmotor 56 der Pumpe 54 nicht mehr Flüssigkeit fördern können als maximal in den Gaskühler 44 eingedüst werden soll. Denn bereits dann, wenn weniger als die maximal erforderliche Flüssigkeitsmenge in den Gaskühler 44 eingedüst werden soll, ist das Regelventil 60 in der Rücklaufleitung 58 bereits geschlossen und die Rücklaufdüsen 42 werden mit ihrer maximal möglichen Eindüsung betrieben, also in dem Betriebszustand der Fig. 2. In einem ersten Betriebsbereich, der von der minimal möglichen Eindüsung der Rücklaufdüsen 42 bis zur maximal möglichen Eindüsung der Rücklaufdüsen 42 läuft, ist das Regelventil 60 also wenigstens teilweise geöffnet und Flüssigkeit strömt über die Rücklaufleitung 58 zurück. In einem zweiten Betriebsbereich, der von der maximal möglichen Eindüsung der Rücklaufdüsen 42 bis zur maximalen Eindüsung mittels der Rücklaufdüsen 42 und der weiteren Düsen 64 in den Gaskühler 44 geht, ist das Regelventil 60 hingegen vorzugsweise geschlossen und über die Rücklaufleitung 58 fließt keine Flüssigkeit zurück in den Vorratstank 50. Nur dann, wenn im zweiten Betriebsbereich eine Regelung der eingedüsten Flüssigkeitsmenge erfolgen soll, wird das Regelventil 60 mindestens teilweise geöffnet und entsprechend der Regelung angesteuert.

Im ersten Betriebsbereich ist das steuerbare Ventil 66 somit geschlossen und die Düsen 64 sind nicht im Betrieb. Um in diesem ersten Betriebsbereich Inkrustierungen und Verstopfungen an den weiteren Düsen 64 zu vermeiden, ist eine Freiblaseinrichtung 70 vorgesehen. Die Freiblaseinrichtung 70 weist eine Zuführleitung 72 für Drucklauft auf, die mittels eines schaltbaren Ventils 74 freigegeben oder abgesperrt werden kann. Im freigegebenen Zustand wird stromaufwärts des steuerbaren Ventils 66 Druckluft in die Zuführleitung zu den weiteren Düsen 64 eingeleitet. Dadurch können Flüssigkeitsrückstände in der Zuleitung und vor allem in den Düsen 64 entfernt werden.

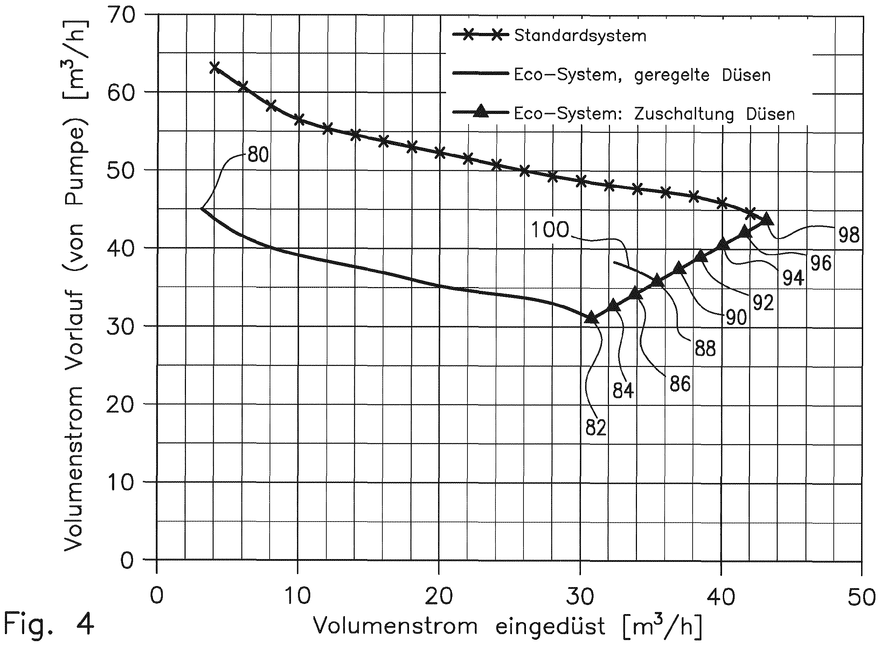

Anhand des Diagramms der Fig. 4 soll der Betrieb der erfindungsgemäßen Sprühanordnung 40 im Vergleich zu einer konventionellen Sprühanordnung weiter erläutert werden. In dem Diagramm der Fig. 4 ist ein Volumenstrom in der Vorlaufleitung 52 über einem in den Gaskühler 44 eingedüsten Volumenstrom aufgetragen. Wird eine konventionelle Sprühanordnung verwendet, die lediglich geregelte Rücklaufdüsen aufweist, so ist anhand der mit Kreuzen versehenen durchgezogenen Linie zu erkennen, dass eine Flüssigkeitsmenge, die von der Pumpe 54 in der Vorlaufleitung 52 zu fördern ist, am niedrigsten ist, wenn der maximal mögliche Volumenstrom eingedüst wird. Werden die Rücklaufdüsen geregelt und fließt somit Flüssigkeit über die Rücklaufleitung 58 zurück in den Vorratstank 50, muss die Pumpe 54 hingegen mehr Flüssigkeit fördern, obwohl weniger Flüssigkeit in den Gaskühler 44 eingedüst wird. Es ist dabei zu beachten, dass das Diagramm der Fig. 4 lediglich zur Veranschaulichung dient und die mit Kreuzen versehene durchgezogene Linie in Fig. 4 lediglich eine gedachte Kurve darstellt, die sich ergeben würde, wenn die Sprühanordnung 40 der Fig. 3 ausschließlich mit Rücklaufdüsen 42 versehen wäre.

Die durchgezogene und teilweise mit Dreiecken markierte Linie in Fig. 4 stellt dahingegen den in der Zulaufleitung 52 tatsächlich geförderten Volumenstrom über den in den Gaskühler 44 eingedüsten Volumenstrom dar. Ausgehend von einem Startpunkt 80, bei dem die Eindüsung von Flüssigkeit über die Rücklaufdüsen 42 in den Gaskühler 44 beginnt, steigt der eingedüste Volumenstrom bis zu einem Punkt 82. Der Punkt 82 stellt die maximal mögliche Eindüsung der Rücklaufdüsen 42 dar. Mittels der Rücklaufdüsen 42 kann somit maximal ein Volumenstrom von etwa 31 m³ pro Stunde in den Gaskühler 44 eingedüst werden. Die Rücklaufdüsen 42 zeigen zwischen den Punkten 80 und 82 das typische Verhalten von Rücklaufdüsen, dass nämlich der durch die Vorlaufleitung 52 von der Pumpe 54 zu fördernde Volumenstrom größer ist als der in den Gaskühler 44 eingedüste Volumenstrom und vor allem der durch die Vorlaufleitung 52 mittels der Pumpe 54 zu fördernde Volumenstrom umso höher wird, je geringer die in den Gaskühler 44 mittels der Rücklaufdüsen 42 eingedüste Flüssigkeitsmenge ist.

Wird ausgehend vom Punkt 82 ein höherer eingedüster Volumenstrom benötigt, werden nacheinander mehrere weitere Düsen 64 zugeschaltet. In der Darstellung der Fig. 3 ist lediglich eine weitere Düse 64 und lediglich ein schaltbares Ventil 66 dargestellt. Tatsächlich sind mehrere weitere Düsen 64, beispielsweise neun weitere Düsen 64, vorhanden, die separat mittels separater steuerbarer Ventile 66 zugeschaltet werden können. Am Punkt 82 kann also eine erste weitere Düse 64 zugeschaltet werden, wodurch sich dann der eingedüste Volumenstrom bis zu einem Punkt 84 erhöht. Werden dann nach Art einer Kaskade weitere Düsen 64 nacheinander zugeschaltet, steigt der eingedüste Volumenstrom über die Punkte 86, 88, 90, 92, 94, 96 bis zu einem Punkt 98, an dem der mittels der Sprühanordnung 40 maximal erreichbare Volumenstrom eingedüst wird. Im Diagramm der Fig. 4 wird dann ein Volumenstrom von etwa 43 m³ pro Stunde in den Gaskühler 44 eingedüst. Dieser Volumenstrom wird durch den Betrieb der Rücklaufdüsen 42 mit jeweils maximaler Eindüsung und zusätzlich den Betrieb von neun weiteren Düsen 64 erzielt. Die Punkte 82 bis 98 liegen im Diagramm der Fig. 4 auf einer geraden Linie. Der durch Zuschalten weiterer Düsen 64 zusätzlich eingedüste Volumenstrom muss über die Vorlaufleitung 52 und die Pumpe 54 zugefördert werden.

Am Punkt 98 liegt somit der mit der erfindungsgemäßen Sprühanordnung 40 eingedüste maximal mögliche Volumenstrom auf dem gleichen Niveau wie ein Volumenstrom, der gemäß der mit Kreuzen versehenen durchgezogenen Linie auch mit einem Standardsystem eingedüst werden könnte, das lediglich Rücklaufdüsen verwendet. Es ist der Fig. 4 aber sofort zu entnehmen, dass mit Ausnahme des Punktes 98 der in der Vorlaufleitung 52 zu fördernde Volumenstrom bei der erfindungsgemäßen Sprühanordnung 40 wesentlich niedriger liegt als bei dem Standardsystem. Speziell muss bei einem eingedüsten Volumenstrom von 4 m³ pro Stunde mit der erfindungsgemäßen Sprühanordnung lediglich ein Volumenstrom von etwa 44 m³ pro Stunde über die Vorlaufleitung 52 gefördert werden. Bei einem Standardsystem, das ausschließlich mit regelbaren Rücklaufdüsen arbeitet, müssten dahingegen etwa 62 m³ pro Stunde in der Vorlaufleitung 52 gefördert werden Trotzdem also mit der erfindungsgemäßen Sprühanordnung 40 der gleiche maximal mögliche Volumenstrom von etwa 43 m³ pro Stunde eingedüst werden kann, nämlich am Punkt 98, können die Pumpe 54, der Antriebsmotor 56 der Pumpe 54 sowie auch die Rohrquerschnitte der Zuführleitung 52 auf den wesentlich geringeren zu fördernden Volumenstrom in der Vorlaufleitung 52 ausgelegt werden.

Darüber hinaus ist Fig. 4 zu entnehmen, dass die minimal mögliche Eindüsung, nämlich am Punkt 80, der erfindungsgemäßen Sprühanordnung 40 niedriger liegt als bei einem Standardsystem, das lediglich Rücklaufdüsen verwendet. An dem Punkt 80 liegt der eingedüste Volumenstrom bei etwa 3 m³ pro Stunde. Bei einem Standardsystem liegt der minimal mögliche eingedüste Volumenstrom hingegen bei 4 m³ pro Stunde. Mit der erfindungsgemäßen Sprühanordnung 40 lässt sich somit ein höheres Regelverhältnis erreichen als mit einem Standardsystem, das lediglich Rücklaufdüsen verwendet.

Zwischen den Punkten 82 und 98 wird ein mittels der Rücklaufdüsen 42 und der weiteren Düsen 64 eingedüster Volumenstrom nicht geregelt. Beim Zuschalten jeweils einer weiteren Düse 64 steigt der eingedüste Volumenstrom zwischen jeweils zwei Punkten 82 bis 98 an. Üblicherweise wird bei so hohen eingedüsten Volumenströmen keine Regelung des eingedüsten Volumenstroms mehr benötigt, so dass das einfache Zuschalten der weiteren Düsen 64, entsprechend der Geraden zwischen den Punkten 82 und 98, ausreicht. Sollte dennoch auch bei diesen hohen eingedüsten Volumenströmen eine Regelung erforderlich sein, kann nach dem Zuschalten einer oder einiger weiterer Düsen 64 der Regelbetrieb der Rücklaufdüsen 42 wieder aufgenommen werden, indem dann das Regelventil 60 angesteuert wird. In Fig. 4 ist beispielhaft eingezeichnet, dass nach dem Erreichen des Punkts 88, also nach dem Zuschalten von vier weiteren Düsen 64, das Regelventil 60 geöffnet wird und somit sich die Rücklaufdüsen 42 wieder im Regelbetrieb befinden. Der eingedüste Volumenstrom geht dann gemäß der in Fig. 4 eingezeichneten Linie 100 wieder zurück und kann dann geregelt werden. Dabei bewegt sich der eingedüste Volumenstrom dann entlang der Linie 100. Selbstverständlich können auch im Regelbetrieb dann noch weitere Düsen 64 zugeschaltet werden, der eingedüste Volumenstrom würde sich dann auf einer Linie bewegen, die etwa parallel zur Linie 100 verläuft und dann aber beispielsweise vom Punkt 92 startet.

## Patentansprüche

1. Sprühanordnung mit wenigstens einer Rücklaufdüse (42) zum Eindüsen von Flüssigkeit in eine Prozessumgebung, **gekennzeichnet durch** einen Vorratstank (50) für die einzudüsende Flüssigkeit, wenigstens eine Vorlaufleitung (52) vom Vorratstank (50) zu der wenigstens einen Rücklaufdüse (42), wenigstens eine Pumpe (54) in der Vorlaufleitung (52), wenigstens eine Rücklaufleitung (58) von der Rücklaufdüse (42) zum Vorratstank (50) und wenigstens ein Regelventil (60) zum Regeln einer von der wenigstens einen Rücklaufdüse (42) eingedüsten Flüssigkeitsmenge, und wenigstens eine weitere Düse (64), die mittels eines unabhängig von dem Regelventil (60) steuerbaren Ventils (66) zum Freigeben und Absperren einer Flüssigkeitszufuhr mit der Vorlaufleitung (52) verbunden ist, wobei
die wenigstens eine weitere Düse (64) nicht an die Rücklaufleitung (58) angeschlossen ist.

2. Sprühanordnung nach Anspruch 1, **dadurch gekennzeichnet, dass** die wenigstens eine weitere Düse als Einstoffdüse ausgebildet ist.

3. Sprühanordnung nach einem der vorstehenden Ansprüche, **dadurch gekennzeichnet, dass** die wenigstens eine weitere Düse (64) mit einer Freiblaseinrichtung (70) versehen ist.

4. Sprühanordnung nach Anspruch 3, **dadurch gekennzeichnet, dass** eine Druckluftquelle vorgesehen ist, die mittels eines schaltbaren Ventils (74) mit der wenigstens einen weiteren Düse (64) verbindbar ist.

5. Verfahren zum Betreiben einer Sprühanordnung nach wenigstens einem der vorstehenden Ansprüche, **dadurch gekennzeichnet, dass** in einem ersten Betriebsbereich Flüssigkeit ausschließlich über die wenigstens eine Rücklaufdüse (42) in die Prozessumgebung eingedüst wird und dass in einem zweiten Betriebsbereich Flüssigkeit sowohl mittels der wenigstens einen Rücklaufdüse (42) als auch mittels der wenigstens einen weiteren Düse (64) eingedüst wird.

6. Verfahren nach Anspruch 5, **gekennzeichnet durch** Regeln einer ersten Flüssigkeitsmenge im ersten Betriebsbereich in Abhängigkeit einer vorgegebenen einzudüsenden Flüssigkeitsmenge.

7. Verfahren nach Anspruch 5 oder 6, **gekennzeichnet durch** Zuschalten, ungeregeltes Betreiben und/oder Abschalten der wenigstens einen weiteren Düse (64) im zweiten Betriebsbereich.

8. Verfahren nach Anspruch 7, wobei mehrere weitere Düsen (64) vorgesehen sind, **gekennzeichnet durch** Zuschalten, ungeregeltes Betreiben und/oder Abschalten einer Anzahl an weiteren Düsen (64) im zweiten Betriebsbereich in Abhängigkeit einer vorgegebenen einzudüsenden Flüssigkeitsmenge.

9. Verfahren nach Anspruch 7 oder 8, **gekennzeichnet durch** Regeln einer eingedüsten Flüssigkeitsmenge im zweiten Betriebsbereich mittels Regeln der von der wenigstens einen Rücklaufdüse (42) eingedüsten Flüssigkeitsmenge.

10. Verfahren nach wenigstens einem der Ansprüche 5 bis 9, **gekennzeichnet durch** Freiblasen der wenigstens einen weiteren Düse (64) nach dem Abschalten.

## Claims

1. Spray arrangement having at least one return flow nozzle (42) for injecting liquid into a process environment, **characterized by** a storage tank (50) for the liquid to be injected, at least one feed line (52) from the storage tank (50) to the at least one return flow nozzle (42), at least one pump (54) in the feed line (52), at least one return line (58) from the return flow nozzle (42) to the storage tank (50) and at least one regulating valve (60) for regulating a liquid quantity injected by the at least one return flow nozzle (42), and at least one further nozzle (64), which is connected to the feed line (52) by means of a controllable valve (66) for enabling and shutting off a liquid feed independent of said regulating valve (60), wherein the at least one further nozzle (64) is not connected to the return line (58).

2. Spray arrangement according to claim 1, **characterized in that** the at least one further nozzle is designed as a single-substance nozzle.

3. Spray arrangement according to any of the preceding claims, **characterized in that** the at least one further nozzle (64) is provided with an air-cleaning device (70).

4. Spray arrangement according to claim 3, **characterized in that** a compressed air source is provided, which can be connected to the at least one further nozzle (64) by means of a switchable valve (74).

5. Method for operating a spray arrangement according to at least one of the preceding claims, **characterized in that** liquid is injected into the process environment exclusively via the at least one return flow nozzle (42) in a first operating range, and **in that** liquid is injected both by means of the at least one return flow nozzle (42) and also by means of the at least one further nozzle (64) in a second operating range.

6. Method according to claim 5, **characterized by** regulation of a first liquid quantity in the first operating range in accordance with a predetermined liquid quantity to be injected.

7. Method according to claim 5 or 6, **characterized by** connection, unregulated operation and/or disconnection of the at least one further nozzle (64) in the second operating range.

8. Method according to claim 7, wherein a plurality of further nozzles (64) is provided, **characterized by** connection, unregulated operation and/or disconnection of a number of further nozzles (64) in the second operating range in accordance with a predetermined liquid quantity to be injected.

9. Method according to claim 7 or 8, **characterized by** regulation of a liquid quantity injected in the second operating range by means of regulation of the liquid quantity injected by the at least one return flow nozzle (42).

10. Method according to at least one of claims 5 to 9, **characterized by** air-cleaning of the at least one further nozzle (64) after disconnection.

## Revendications

1. Dispositif de pulvérisation comprenant au moins une buse de retour (42) destinée à l'injection de liquide dans un environnement de traitement, **caractérisé par** un réservoir de stockage (50) destiné au liquide à injecter, au moins une conduite d'alimentation (52) allant du réservoir de stockage (50) à l'au moins une buse de retour (42), au moins une pompe (54) située dans la conduite d'alimentation (52), au moins une conduite de retour (58) allant de la buse de retour (42) au réservoir de stockage (50) et au moins une vanne de régulation (60) destinée à réguler une quantité de liquide injecté depuis au moins une buse de retour (42), et au moins une autre buse (64) qui est reliée à la conduite d'alimentation (52) au moyen d'une vanne (66) pouvant être commandée indépendamment de la vanne de régulation (60) et destinée à permettre et bloquer une alimentation en liquide, l'au moins une autre buse (64) n'étant pas raccordée à la conduite de retour (58).

2. Dispositif de pulvérisation selon la revendication 1, **caractérisé en ce que** l'au moins une autre buse est conçue comme une buse à substance unique.

3. Dispositif de pulvérisation selon l'une des revendications précédentes, **caractérisé en ce que** l'au moins une autre buse (64) est munie d'un moyen de soufflage (70).

4. Dispositif de pulvérisation selon la revendication 3, **caractérisé en ce qu'**il est prévu une source d'air comprimé qui peut être raccordée à l'au moins une autre buse (64) au moyen d'une vanne commutable (74).

5. Procédé de fonctionnement d'un dispositif de pulvérisation selon l'une au moins des revendications précédentes, **caractérisé en ce que**, dans une première zone de fonctionnement, du liquide est injecté exclusivement par l'au moins une buse de retour (42) dans l'environnement de traitement et **en ce que**, dans une deuxième zone de fonctionnement, du liquide est injecté aussi bien au moyen d'au moins une buse de retour (42) qu'au moyen d'au moins une autre buse (64).

6. Procédé selon la revendication 5, **caractérisé par** la régulation d'une première quantité de liquide dans la première zone de fonctionnement en fonction d'une quantité prédéterminée de liquide à injecter.

7. Procédé selon la revendication 5 ou 6, **caractérisé par** une activation, un fonctionnement non régulé et/ou une désactivation de l'au moins une autre buse (64) dans la deuxième zone de fonctionnement.

8. Procédé selon la revendication 7, plusieurs autres buses (64) étant prévues, **caractérisé par** l'activation, le fonctionnement non régulé et/ou la désactivation d'un certain nombre de buses supplémentaires (64) dans la deuxième zone de fonctionnement en fonction d'une quantité prédéterminée de liquide à injecter.

9. Procédé selon la revendication 7 ou 8, **caractérisé par** la régulation d'une quantité injectée de liquide dans la deuxième zone de fonctionnement au moyen d'une régulation de la quantité de liquide injecté par l'au moins une buse de retour (42).

10. Procédé selon l'une au moins des revendications 5 à 9, **caractérisé par** le soufflage de l'au moins une autre buse (64) après la désactivation.
